(19) Europäisches Patentamt
European Patent Office
Office européen des brevets

(11) **EP 2 427 785 B1**

(12) **EUROPÄISCHE PATENTSCHRIFT**

(45) Veröffentlichungstag und Bekanntmachung des Hinweises auf die Patenterteilung:
**06.03.2013 Patentblatt 2013/10**

(51) Int Cl.:
*G01S 13/88* $^{(2006.01)}$     *G01S 7/41* $^{(2006.01)}$
*G01V 3/12* $^{(2006.01)}$

(21) Anmeldenummer: **10713308.4**

(22) Anmeldetag: **18.03.2010**

(86) Internationale Anmeldenummer:
**PCT/EP2010/001723**

(87) Internationale Veröffentlichungsnummer:
**WO 2010/127739 (11.11.2010 Gazette 2010/45)**

(54) **VERFAHREN ZUR ERKENNUNG EINES VERHÜLLTEN DIELEKTRISCHEN OBJEKTS**

METHOD FOR DETECTING A COVERED DIELECTRIC OBJECT

PROCÉDÉ DE DÉTECTION D'UN OBJET DIÉLECTRIQUE DISSIMULÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.05.2009 DE 102009019992**
**07.09.2009 DE 102009040450**

(43) Veröffentlichungstag der Anmeldung:
**14.03.2012 Patentblatt 2012/11**

(73) Patentinhaber:
• **Rohde & Schwarz GmbH & Co. KG**
**81671 München (DE)**
• **Friedrich-Alexander-Universität Erlangen-Nürnberg**
**91054 Erlangen (DE)**

(72) Erfinder:
• **OSTWALD, Olaf**
**81541 München (DE)**
• **AHMED, Sherif, Sayed**
**81737 München (DE)**

(74) Vertreter: **Körfer, Thomas**
**Mitscherlich & Partner**
**Patent- und Rechtsanwälte**
**Sonnenstrasse 33**
**80331 München (DE)**

(56) Entgegenhaltungen:
**US-A1- 2006 066 469    US-A1- 2008 304 044**

## Beschreibung

Die Erfindung betrifft ein Verfahren zur Erkennung eines verhüllten dielektrischen Objekts.

In der Sicherheitstechnik, z.B. an Flughäfen, haben sich zur Identifizierung von verhüllten bzw. versteckten Objekten verschiedene Technologien etabliert. Während bei der Überwachung von Gepäckstücken und Taschen, ionisierende Röntgenstrahlung zum Einsatz kommt, die die Identifizierung einer Vielzahl von Gegenständen und Materialien ermöglicht, werden bei der Überwachung von Menschen und von der Kleidung des Menschen verhüllten Gegenständen in der Regel nur Metall-Detektoren verwendet, die einzig Gegenstände aus Metall detektieren.

Für die Detektion von Objekten aus Nicht-Metall, die von Menschen in ihrer Kleidung versteckt gehalten werden, sind in jüngster Zeit Systeme mit Mikro- und Millimeterwellen entwickelt worden. Aus der US 6,965,340 B1 geht ein System und ein Verfahren zur Detektion von am Körper eines Menschen getragenen Gegenständen aus unterschiedlichen Materialien mittels Millimeterwellen hervor.

Da Millimeterwellen in der Luft und an der Kleidung der zu untersuchenden Person nicht oder nur geringfügig reflektiert werden, an metallenen Objekten sowie an Objekten mit einem hohen Wassergehalt, beispielsweise der menschlichen Haut und des menschlichen Gewebes, nahezu eine totale Reflexion sowie an Objekten mit einer Permittivität zwischen derjenigen von Luft und derjenigen von Wasser eine von der Permittivität und der Dicke des Objekts abhängige Teilreflexion erfahren, kann durch Messen des Betrags und der Phase der reflektierten Millimeterwellen mithilfe eines Fokussierverfahrens ein in der Nähe des menschlichen Körpers versteckt gehaltenes Objekt auch aus einem nicht-metallenen Material, beispielsweise ein Messer aus Keramik oder ein explosives Pulver, identifiziert werden.

Das in der US 6,965,340 B1 beschriebene Verfahren weist aber folgendes Defizit für die Detektion von am Körper eines Menschen versteckt gehaltenen Objekten auf:

Gegenüber einem rein planaren Objekt werden die reflektierten Millimeterwellen bei einem Objekt mit einer nicht-ebenen, insbesondere mit einer "getaperten", Oberfläche aufgrund einer höheren Streuungskomplexität verändert. Ein mit dem Original-Objekt örtlich übereinstimmendes Abbild des Original-Objekts und damit ein örtlich eindeutiges und exaktes Detektieren des verhüllten Objekts ist in diesem Fall nicht mehr gewährleistet.

Aus der US 2006/066469 A1 ist bereits ein Verfahren zur Erkennung eines verhüllten dielektrischen Objekts bekannt. Das aus dieser Druckschrift bekannte Verfahren hat jedoch das Problem, dass am Rand der Objekte keine ausreichende Kontrastbildung stattfindet.

Aufgabe der Erfindung ist es deshalb, ein Verfahren zur Erkennung von verhüllten Objekten zu schaffen, das ein eindeutiges Erkennungsergebnis hinsichtlich der örtlichen Auflösung des zu erkennenden Objektes und hinsichtlich der korrekten Unterscheidung zwischen dielektrischen Objekten und dem menschlichen Körper ermöglicht.

Die Erfindungsaufgabe wird durch ein Verfahren zur Detektion eines verhüllten Objekts mit den Merkmalen des Patentanspruchs 1 gelöst. Vorteilhafte technische Ergänzungen sind in den abhängigen Patentansprüchen aufgeführt.

Erfindungsgemäß wird anstelle einer reinen Betrags- und Phasen-Betrachtung der reflektierten Millimeter- oder Mikrowellen die Interferenz - d.h. die Überlagerung - von der in Senderichtung an der Vorderseite des verhüllten Objekts reflektierten Welle und der in Senderichtung an der Rückseite des verhüllten Objekts reflektierten Welle betrachtet. Da typischerweise der Betrag einer der beiden reflektierten Wellen der Höchste und der Betrag der anderen der beiden reflektierten Wellen der Zweithöchste ist, kann durch Identifizierung einer sogenannten Interferenzantwort, bestehend aus einer höchsten Signalamplitude und einer innerhalb eines bestimmten Zeitintervalls zeitlich vorausgehenden oder nachfolgenden zweithöchsten Signalamplitude der reflektierten Mikrowellen, ein verhülltes Objekt detektiert werden.

Um eine Fehldetektion von Störsignalen, die durch Rauschen oder durch andere Teilreflexionen in einem Gegenstand mit beispielsweise örtlich veränderlicher Permittivität und/oder mit im Objekt enthaltenen Strukturen zu verhindern, wird die Differenz zwischen der höchsten und dem zweithöchsten Signalamplitude des reflektierten Mikrowellensignals mit einem festgelegten Schwellwert verglichen, so dass einzig dann ein Paar von an der Vorderseite und an der Rückseite des versteckt gehaltenen Objekts reflektierten Mikrowellensignals vorliegt, wenn die Differenz zwischen der höchsten und der zweithöchsten Signalamplitude des reflektierten Mikrowellensignals kleiner als der festgelegte Schwellwert ist.

Um den Ort des versteckten Objekts in Relation zum zu untersuchenden menschlichen Körper in einer zweidimensionalen Darstellung eindeutig bestimmen zu können, wird der dreidimensionale Raum, der den menschlichen Körper mit dem verhüllten Objekt enthält, durch dreidimensionale Fokussierung des gesendeten Mikrowellensignals bzw. der gesendeten Mikrowellensignale und optional durch empfangsseitige Fokussierung der reflektierten Mikrowellensignale abgetastet. Das dreidimensionale mittels Fokussierung gewonnene Raster wird mit einem hier nicht näher dargestellten Verfahren in ein laterales zweidimensionales Raster bestehend aus einzelnen Rasterpunkten mit einer bestimmten Rasterauflösung überführt. Der in den einzelnen Rasterpunkten des lateralen zweidimensionalen Rasters ermittelte Betrags- und Phasenunterschied des reflektierten Mikrowellensignals zum gesendeten Mikrowellensignal, der jeweils über eine bestimmte Bandbreite bestimmt wird, wird anschließend mittels Fourier-Transformation in den Zeitbereich transformiert.

Anschließend wird in jedem Rasterpunkt des lateralen, zweidimensionalen Rasters, die Differenz zwischen der höchsten und zweithöchsten Signalamplitude des in den Zeitbereich transformiertem und zum gesendeten Mikrowellsignal referenzierten reflektierten Mikrowellensignals ermittelt und mit einem Schwellwert verglichen. Existieren mehrere zusammenhängende Rasterpunkte im Raster, in denen jeweils die ermittelte Differenz kleiner als der Schwellwert ist, so ist ein verhülltes Objekt detektiert.

Das bevorzugte Anwendungsgebiet der Detektion eines verhüllten Objekts ist die Detektion eines am menschlichen Körper verhüllten Gegenstandes, beispielsweise eines in der vom Menschen getragenen Kleidung, in Schuhen, in Hüten usw. versteckt gehaltenen Objekts. Darüber hinaus eignet sich das Detektionsverfahren natürlich auch für in Gegenständen, beispielsweise in Taschen, Koffern usw. versteckt gehaltenen Objekten.

Beim detektierten Objekt kann es sich um eine Substanz in allen möglichen Aggregatszuständen - fest, flüssig oder gasförmig handeln, wobei sich die Permittivität der Substanz einzig von der hohen Permittivität von Wasser, welches in durchblutetem Gewebe in hohem Maße enthalten ist, unterscheiden sollte. Auch an die Form und an die Oberfläche des Objekts gibt es keine Einschränkungen, so dass quaderförmige, schichtförmige oder kugelförmige Objekte wie auch Objekte mit einer hochkomplexen Oberflächen- und Formstruktur eindeutig und zuverlässig detektiert werden können.

Die Bandbreite des ausgesendeten Mikrowellensignals ist indirekt proportional zur Dicke des zu detektierenden Objekts in Senderichtung zu wählen. Das Spektrum des Sendesignals wird softwareseitig durch Filterung mittels Hamming-, Hann-, Gauß- und/oder Tschebyscheff-Filterung gefenstert. Die Sendeleistung und die Empfangsempfindlichkeit ändern sich dabei jedoch nicht.

Um Unschärfen im Detektionsergebnis aufgrund von mechanisch-geometrischen Strukturen, z.B. aufgrund von Streuungen am zu detektierenden Objekt, zu minimieren, erfolgt im Empfänger eine Nachverarbeitung des in den einzelnen Rasterpunkten des lateralen, zweidimensionalen Rasters empfangenen Amplitudenverlaufs des am verhüllten Objekt reflektierten Mikrowellensignals.

Hierzu werden in einer ersten Ausführungsform für jeden Rasterpunkt des lateralen Rasters mehrere jeweils benachbarte Gruppen aus einer festgelegten Anzahl von bevorzugt gleich vielen, jeweils in einem Winkelsegment zum jeweiligen Rasterpunkt in der Nähe des jeweiligen Rasterpunkts benachbart positionierten Rasterpunkten festgelegt. Daraufhin wird in jeder Gruppe von Rasterpunkten des jeweilig betrachteten Rasterpunktes die Anzahl von Rasterpunkten ermittelt, in denen die ermittelte Differenz zwischen einer innerhalb eines gewählten Zeitintervalls gelegenen höchsten und zweithöchsten Amplitude der Zeitantwort des reflektierten Mikrowellensignals kleiner als der festgelegte Schwellwert ist. Sind in jeder der zum jeweilig betrachteten Rasterpunkt gehörigen Gruppe eine vorher festgelegte Anzahl von Rasterpunkten mit einer gegenüber dem festgelegten Schwellwert kleineren Differenz zwischen höchsten und zweithöchsten erfassten Amplitude der Zeitantwort des reflektierten Mikrowellensignals gezählt worden, so wird der jeweilig betrachtete Punkt zur Ansammlung von Rasterpunkten, die ein verstecktes Objekt charakterisieren, hinzugefügt.

Auf diese Weise ist gewährleistet, dass nur ein solcher Rasterpunkt zu der ein verstecktes Objekt detektierenden Ansammlung von Rasterpunkten hinzugefügt wird, der in allen Richtungen von einer vorgegebenen Minimalanzahl von Rasterpunkten unmittelbar benachbart umgeben ist, die ebenfalls eine gegenüber dem festgelegten Schwellwert kleinere Differenz zwischen höchsten und zweithöchsten erfassten Amplitude der Zeitantwort des reflektierten Mikrowellensignals aufweisen. Somit werden für die weitere Detektions-Verarbeitung nur Agglomerationen von benachbarten Rasterpunkten mit jeweils einer gegenüber dem festgelegten Schwellwert kleineren Differenz zwischen höchsten und zweithöchsten erfassten Amplitude der Zeitantwort des reflektierten Mikrowellensignals weiterverfolgt, während singuläre Rasterpunkte sowie Rasterpunkte, die zu eindimensionalen Anordnungen wie Linien gehören, und Rasterpunkte, die nur kleine Flächen oder nur mehrere nicht zusammenhängende Flächen einer größeren Fläche bedecken, nicht weiter berücksichtigt werden.

In einer zweiten Ausführungsform wird ausgehend von einem Rasterpunkt, der eine gegenüber einem festgelegten Schwellwert kleinere Differenz zwischen dem höchsten und dem zweithöchsten erfassten Signalamplitude des reflektierten Mikrowellensignals aufweist, in beiden Richtungen und in beiden Dimensionen des Raster sukzessive in mehreren Suchschritten nach jeweils direkt benachbarten Rasterpunkten gesucht, die jeweils eine gegenüber einem festgelegten Schwellwert kleinere Differenz zwischen dem höchsten und dem zweithöchsten erfassten Signalamplitude des reflektierten Mikrowellensignals aufweisen. Liegt dieses Interferenz-Kriterium vor, so wird der jeweilige Rasterpunkt zu der Gruppe von zusammenhängenden Rasterpunkten hinzugefügt. Wurden auf diese Weise alle Rasterpunkte des Rasters untersucht, so wird anhand von Kriterien überprüft, ob die auf diese Weise ermittelte Gruppe von zusammenhängenden Rasterpunkten eine Ansammlung von Rasterpunkten darstellt. Ein Kriterium ist beispielsweise, ob die Anzahl der Rasterpunkte der Gruppe von zusammenhängenden Rasterpunkten oberhalb einer Mindestanzahl liegt.

Um einerseits Unregelmäßigkeiten in der Detektion des verhüllten Objekts am Rand der Ansammlung von Rasterpunkten und andererseits das detektierte Objekt in Originalgröße darzustellen, wird die Ansammlung vorzugsweise von Rasterpunkten um Rasterpunkte ergänzt, die innerhalb eines die Ansammlung vorzugsweise von Rasterpunkten umgebenden Randbereichs positioniert sind. Die Breite des Randbereiches kann abhängig von der erzielten Qualität der Detektion des jeweils zu detektierenden Objekts eingestellt werden.

Äquivalent können Rasterpunkte mit einer gegenüber dem festgelegten Schwellwert größeren Differenz zwischen höchstem und zweithöchstem erfassten Signalamplitude innerhalb einer Ansammlung von Rasterpunkte, die fälschlicherweise nicht zur Ansammlung von Rasterpunkten nach den ersten Verarbeitungsschritten hinzugefügt wurden, nachträglich zur Verbesserung des Detektionsergebnisses noch hinzugefügt werden.

Zur Darstellung des verhüllten Gegenstandes auf einem Bildschirm, der das gesamte erfasste laterale, zweidimensionale Raster abbildet, können die zur identifizierten Ansammlung von Rasterpunkten gehörigen Rasterpunkte vorzugsweise mit einer bestimmten ersten Farbe versehen werden. Die nicht zur Ansammlung von Rasterpunkten gehörigen Rasterpunkte werden mit einer zweiten Farbe versehen. Alternativ kann den nicht zur Ansammlung von Rasterpunkten gehörigen Rasterpunkten eine Bildinformation des zugehörigen Rasterpunkts des gerasterten menschlichen Körpers zugewiesen werden, die als Betragsbild oder als optisches Foto vorliegen kann. Auf diese Weise ist die Lage des detektierten Objekts in Bezug zum menschlichen Körper besser zu erkennen.

Schließlich ist es möglich, das verhüllte Objekt mehrmalig in einem bestimmten Zeitraster zu detektieren. Auf diese Weise kann eine Detektion des verhüllten Objekts bei einem bewegten menschlichen Körper durchgeführt werden. Die Abbild-Sequenz des verhüllten Objekts kann aufgrund unterschiedlicher Orientierung des verhüllten Gegenstands während der Bewegung eine zusätzliche Bildinformation über das verhüllte Objekt bieten, die zu einem verbesserten Detektions-Ergebnis führt.

Ein Ausführungsbeispiel des erfindungsgemäßen Verfahrens zur Erkennung eines verhüllten dielektrischen Objekts wird im Folgenden anhand der Zeichnung im Detail beispielhaft erläutert. Die Figuren der Zeichnung zeigen:

Fig. 1A,1B,1C      eine Darstellung von mehreren an einem menschlichen Körper befestigten und zu detektierenden dielektrischen Objekten, eine Abbildung einer zugehörigen Betrags-Antwort und einer zugehörigen Interferenz-Antwort,

Fig. 2      ein Zeitdiagramm einer ausgesendeten, einer einfach reflektierten und einer doppelt reflektierten Mikrowelle,

Fig. 3      ein Zeitdiagramm mit dem Zeitverlauf eines reflektierten Mikrowellensignals,

Fig. 4      eine Abbildung einer zweidimensionalen Interferenz-Antwort eines mit zu detektierenden dielektrischen Objekten versehenen menschlichen Körpers mit Darstellung der unterschiedlichen Differenzen,

Fig. 5      eine Abbildung einer Interferenz-Antwort eines mit zu detektierenden dielektrischen Objekten versehenen menschlichen Körpers ohne Darstellung der unterschiedlichen Differenzen,

Fig. 6      eine Abbildung einer Interferenz-Antwort mit einer Ansammlung von Rasterpunkten, die ein Interferenz-Kriterium erfüllen,

Fig. 7      eine Abbildung einer Interferenz-Antwort als Ansammlung von Rasterpunkten mit einem ergänzenden Randbereich,

Fig. 8      eine Abbildung einer Interferenz-Antwort mit Rasterpunkten innerhalb einer Ansammlung von Rasterpunkten, die das Interferenz-Kriterium nicht erfüllen,

Fig. 9      eine Abbildung einer Interferenz-Antwort mit einer Ansammlung von Rasterpunkten, die das Interferenz-Kriterium erfüllen oder, die das Interferenz-Kriterium nicht erfüllen, sich jedoch innerhalb einer Ansammlung von Rasterpunkten befinden, die das Interferenz-Kriterium erfüllen,

Fig. 10      eine erste Ausführungsform einer bildlichen Darstellung eines detektierten Objekts,

Fig. 11      eine zweite Ausführungsform einer bildlichen Darstellung eines detektierten Objekts,

Fig. 12A,12B,12C      ein Flussdiagramm eines erfindungsgemäßen Verfahrens zur Erkennung eines verhüllten dielektrischen Objekts,

Fig.13A,13B,13C      eine erste, zweite und dritte Ausführungsform zur Ermittlung einer Ansammlung von Rasterpunkten und

Fig. 14        eine Anordnung zur Detektion eines verhüllten Objekts am menschlichen Körper, die zur Durchführung des Verfahrens verwendet werden kann.

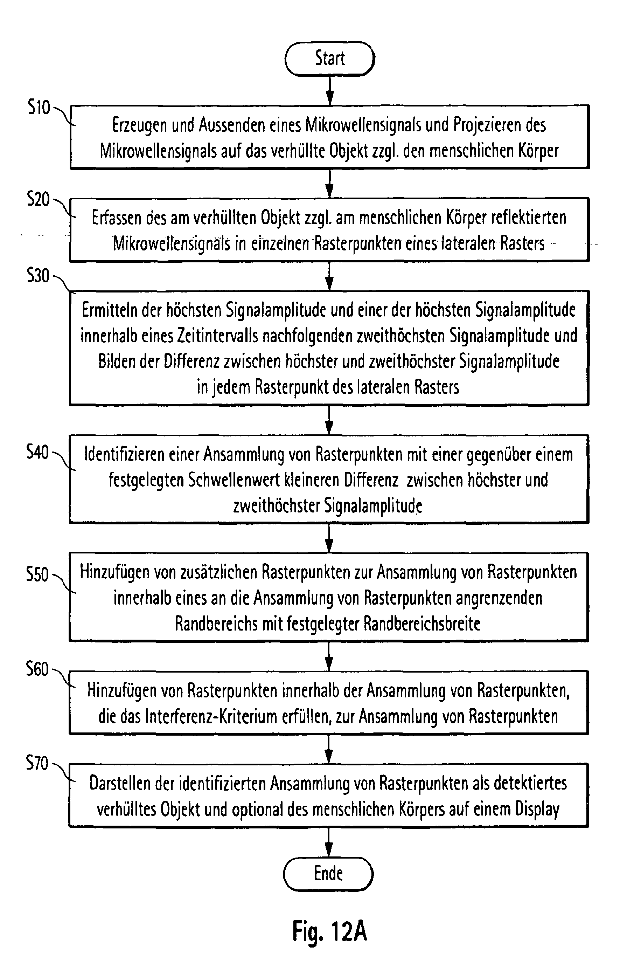

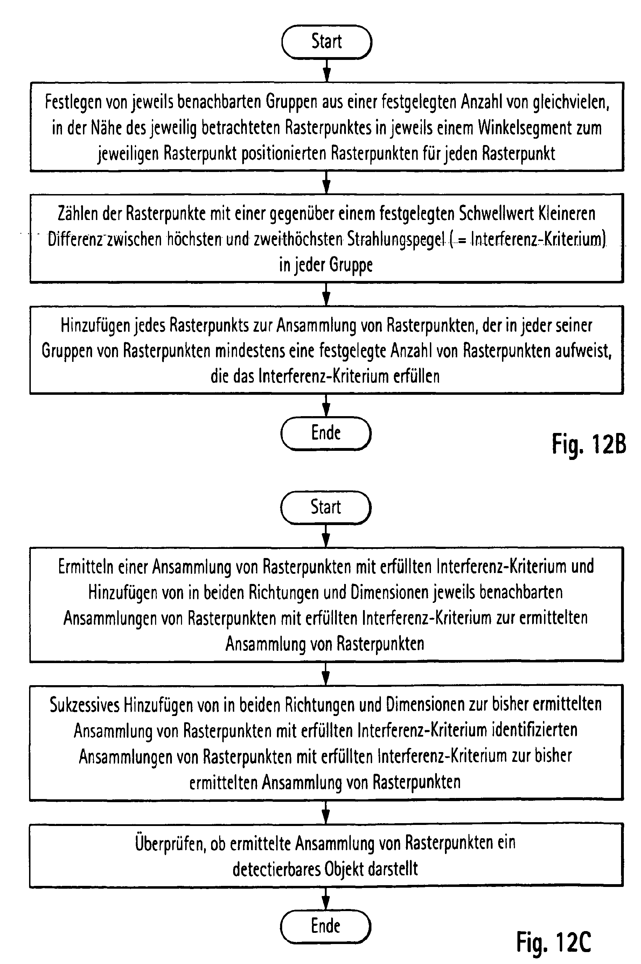

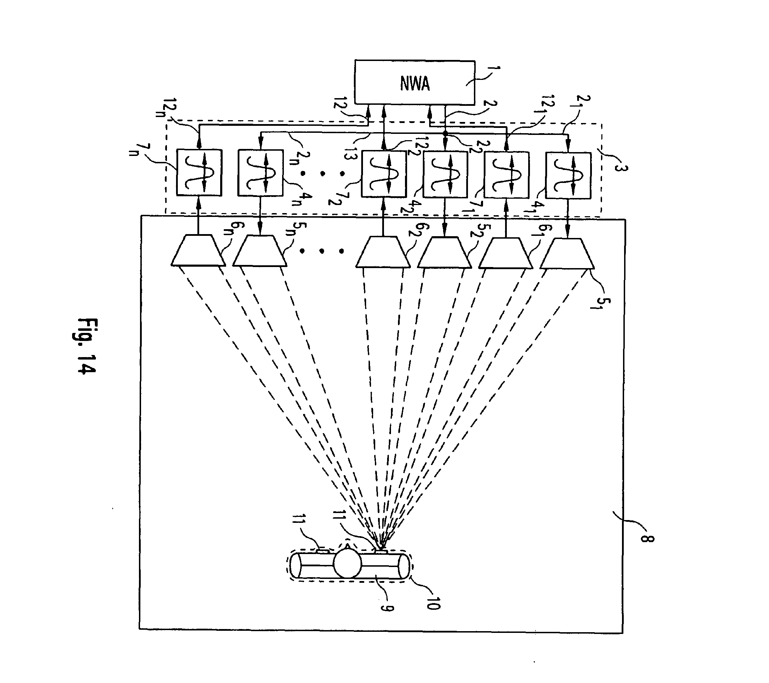

Im Folgenden wird das erfindungsgemäße Verfahren zur Erkennung eines verhüllten dielektrischen Objekts, insbesondere eines am menschlichen Körper verhüllten Objekts, anhand des Flussdiagramms in den Figuren 12A, 12B und 12C im Detail erläutert. Hierbei wird auf eine Anordnung zur Erkennung von am menschlichen Körper verhüllten dielektrischen Objekten gemäß Fig. 14 Bezug genommen.

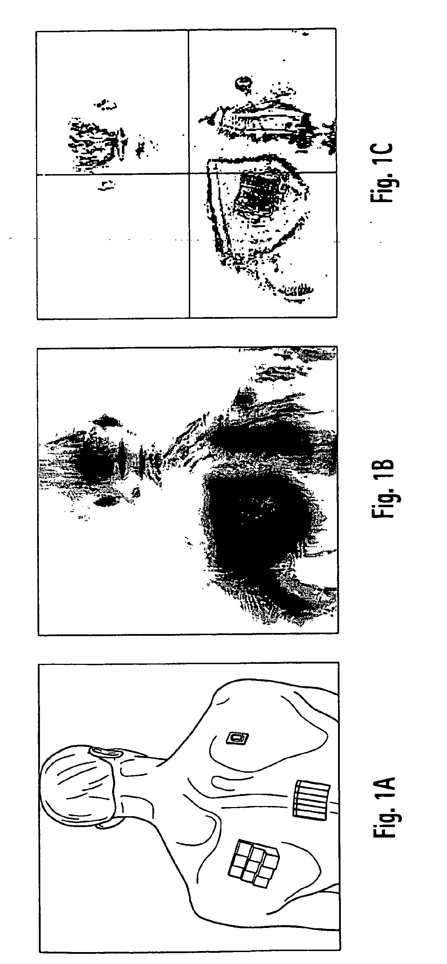

Für das Verständnis der im einzelnen im Folgenden zu erläuternden Figuren sei auf eine Anordnung von verschiedenen Objekten mit einer bestimmten Permittivität, die auf einem menschlichen Körper befestigt sind, gemäß Fig. 1A verwiesen. Die zugehörige Betrags-Antwort und die zugehörige Interferenz-Antwort sind in den Figuren 1B und 1C dargestellt.

Im ersten Verfahrensschritt S10 wird ein Mikrowellensignal mit einer bestimmten Bandbreite erzeugt und in Richtung des verhüllten Objekts, insbesondere in Richtung des menschlichen Körpers, in dessen Kleidung das zu detektierende Objekt verhüllt ist, ausgesendet. Die Erzeugung des Mikrowellensignals erfolgt beispielsweise in einem Signalgenerator eines Netzwerkanalysators (NWA) 1. Die Bandbreite $\Delta f$ des Mikrowellensignals ist gemäß Gleichung (1) indirekt proportional zur Tiefen-Auflösung und somit zur Dicke $\Delta L$ des zu detektierenden Objekts in Senderichtung auszulegen, wobei c die Ausbreitungsgeschwindigkeit des Mikrowellensignals im jeweiligen dielektrischen Material ist.

$$\Delta f = \frac{c}{2 \cdot \Delta L} \tag{1}$$

Das im Netzwerkanalysator 1 erzeugte Mikrowellensignal wird über die Verbindungsleitung 2, beispielsweise ein Koaxialkabel, einem in Fig. 14 nicht dargestellten Signalteiler zugeführt, der das Mikrowellensignal in identische Teil-Mikrowellensignale aufteilt und über jeweils eine Verbindungsleitung $2_1, 2_2,...,2_n$ zu einer zum jeweiligen Mikrowellensignal gehörigen sendeseitigen Fokussier-Untereinheit $4_1, 4_2,...,4_n$ der Fokussier-Einheit 3 zuleitet. In den einzelnen sendeseitigen Fokussier-Untereinheiten $4_1, 4_2,..., 4n$ wird das jeweilige Teil-Mikrowellensignal softwaremäßig, beispielsweise mit einem Digital-Beam-Forming-Algorithmus, soweit aufbereitet, dass das jeweilige Teil-Mikrowellensignal in einer an die Fokussier-Einheit 3 sich anschließenden Sendeantenne $5_1, 5_2,..,5_n$, beispielsweise in einer Horn-Antenne, auf den jeweils abzutastenden Raumpunkt fokussiert wird. Hierbei werden die einzelnen Teil-Mikrowellensignale entsprechend der jeweiligen Entfernung der einzelnen Sendeantenne $5_1, 5_2,..,5_n$ zum jeweils zu fokussierenden Raumpunkt in ihrer Phase zueinander verschoben. Sequentiell werden die von den einzelnen Sendeantennen $5_1, 5_2,..,5_n$ ausgesendeten Teil-Mikrowellensignale jeweils auf jeden einzelnen Raumpunkt innerhalb des Beobachtungsraums 8 fokussiert.

Die auf den menschlichen Körper 9 projizierten Teil-Mikrowellensignale werden am menschlichen Körper 9 wie auch an den in bzw. innerhalb der gestrichelt in Fig. 14 angedeuteten Kleidung 10 versteckt gehaltenen und in Fig. 14 angedeuteten Objekten 11 reflektiert.

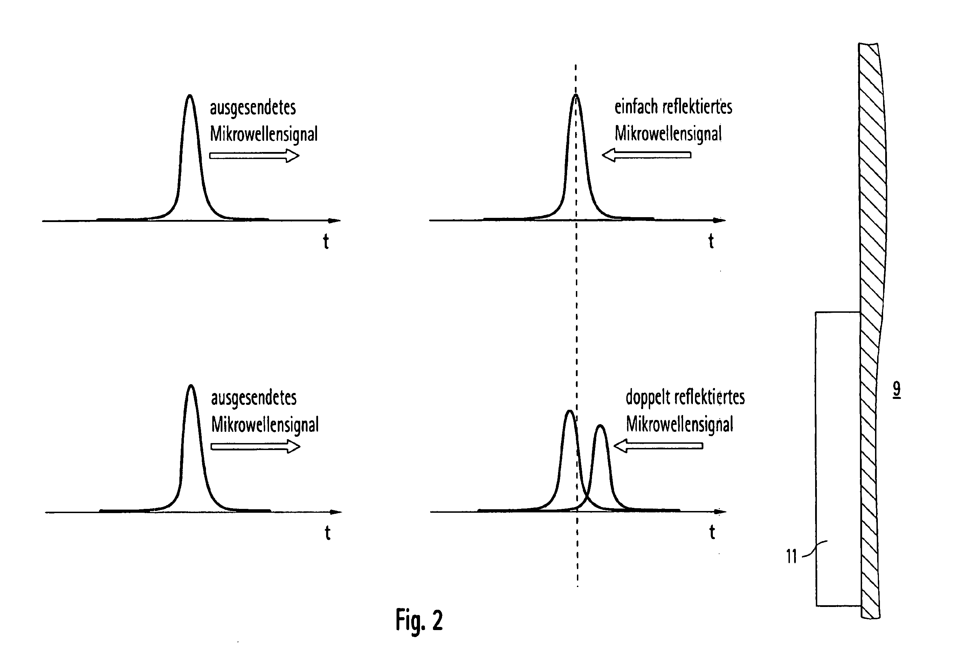

Während gemäß Fig. 2 ein ausgesendetes Mikrowellensignal am menschlichen Körper 9 aufgrund seines hohen Wassergehalts näherungsweise eine Totalreflexion an dessen Oberfläche erfährt, erfährt es an einem zu detektierenden Objekt 11 mit einer gegenüber der Dämpfung des Wassers niedrigeren Dämpfung eine erste Teilreflexion an der Vorderseite des Objekts 11 und eine zweite Teilreflexion an der Rückseite des Objekts 11. Somit ergibt sich bei einer näherungsweisen Totalreflexion am menschlichen Körper 11 ein reflektiertes Mikrowellensignal aus einem einzigen Impuls und bei den beiden bzw. mehrfachen Teilreflexionen am zu detektierenden Objekt 11 ein reflektiertes Mikrowellensignal mit einem doppelten Impuls bzw. einem Mehrfachimpuls. Das aus mindestens einem doppelten Impuls bestehende reflektierte Mikrowellensignal beim zu detektierenden Objekt 11, die auch als Interferenz zweier teilreflektierter Mikrowellensignale und somit als sogenannte Interferenz-Antwort interpretiert werden kann, stellt somit ein Unterscheidungskriterium zum aus einem einzigen Impuls bestehenden totalreflektierten Mikrowellensignal beim menschlichen Körper 9 dar.

Die jeweils reflektierten Teil-Mikrowellensignale werden in zugehörigen Empfangsantennen $6_1, 6_2,...,6_n$ empfangen und nachfolgenden empfangsseitigen Fokussier-Untereinheiten $7_1, 7_2,...,7n$ der Fokussier-Einheit 3 zugeführt. In den empfangsseitigen Fokussier-Untereinheiten $7_1, 7_2,...,7_n$ werden die in einem Raumpunkt reflektierten Teil-Mikrowellensignale zueinander fokussiert. Über Verbindungsleitungen $12_1, 12_2,...,12_n$ werden die in den einzelnen Fokussier-Untereinheiten $7_1, 7_2,...,7_n$ fokussierten Teil-Mikrowellensignale zu unterschiedlichen Toren des Mehrtor-Netzwerkanalysators 1 zugeführt. Dort werden die Beträge und die Phasen die einzelnen Teil-Mikrowellensignale entsprechend der jeweiligen Entfernung des zu fokussierenden Raumpunkts zur jeweiligen Empfangsantenne $6_1, 6_2,..., 6_n$ zueinander erfasst.

Anstelle von n Sendeantennen $5_1, 5_2,..., 5_n$ kann alternativ auch eine reduzierte Anzahl von Sendeantennen verwendet werden. Es kann auch nur eine einzige Sendeantenne $5_1$ ohne sendeseitige Fokussierung zum Einsatz kommen. Auch die Anzahl von Empfangsantennen $6_1, 6_2, ..., 6_n$ kann entsprechend der gewünschten empfangsseitigen Fokussierqualität variiert werden. Die Empfangsfokussierung findet bevorzugt innerhalb des Netzwerkanalysators rein rechnerisch statt, ohne dass die Fokussier-Untereinheiten $7_1, 7_2, ..., 7_n$ physisch vorhanden sind.

Anstelle der hier vorgestellten synthetischen Fokussierung kann auch eine physikalische Fokussierung mittels einer sende- und/oder empfangsseitig physikalisch realisierten Fokussiereinrichtung, beispielsweise mit einem Fresnel-Spiegel mit piezoelektrisch verstellbaren Spiegelelementen, durchgeführt werden. Anstelle eines Netzwerkanalysators kann auch eine andere phasenempfindliche Sende-Empfangs-Einrichtung zum Einsatz kommen.

Im nächsten Verfahrensschritt S20 wird im Netzwerkanalysator 1 oder in einer dem Netzwerkanalysator 1 nachgeschalteten Signalverarbeitungseinheit das empfangene Mikrowellensignal, das rasterförmig von den einzelnen Stellen des menschlichen Körpers 9 und von den einzelnen Stellen der am menschlichen Körper 9 verhüllt gehaltenen Objekte 11 reflektiert wurde, ebenfalls rasterförmig in einzelnen Rasterpunkten eines dem lateralen zweidimensionalen Bild des menschlichen Körpers 9 entsprechenden lateralen zweidimensionalen Raster-Abbilds im Frequenzbereich erfasst, in den Zeitbereich transformiert und zwischengespeichert.

Im darauffolgenden Verfahrensschritt S30 werden im Netzwerkanalysator 1 oder in einer dem Netzwerkanalysator 1 nachgeschalteten Signalverarbeitungseinheit aus den zwischengespeicherten Abtastwerten des reflektierten Mikrowellensignals für jeden Rasterpunkt des lateralen, zweidimensionalen Rasters jeweils die höchste Signalamplitude des reflektierten Mikrowellensignals und jeweils die zweithöchste Signalamplitude des reflektierten Mikrowellensignals innerhalb eines bestimmten, vorher festgelegten Zeitintervalls vor oder nach dem Auftreten der höchsten Signalamplitude über ein Erfassungsintervall ermittelt.

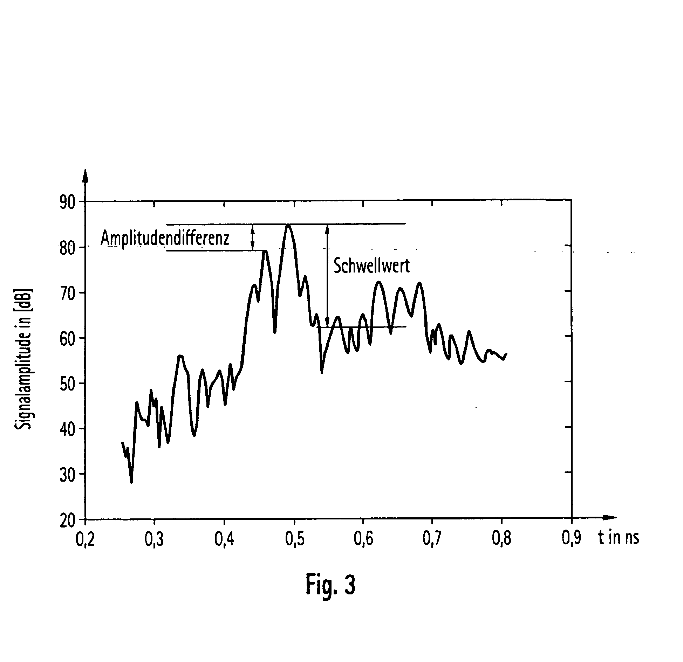

Anschließend wird gemäß Fig. 3 die Differenz zwischen der in einem Rasterpunkt jeweils ermittelten höchsten und zweithöchsten Signalamplitude des Mikrowellensignals gebildet und die Differenz mit einem Schwellwert verglichen. Ist die Differenz zwischen der höchsten und dem zweithöchsten Signalamplitude des Mikrowellensignals kleiner als ein Schwellwert, was im Folgenden als Interferenz-Kriterium bezeichnet wird, so liegt eine doppelte Reflexion des ausgesendeten Mikrowellensignals an einem verhüllten dielektrischen Objekt 11 und damit eine Interferenz-Antwort vor. Im anderen Fall ist die höchste Signalamplitude des Mikrowellensignals mit beispielsweise einer Rauschsignalspitze verglichen worden und es liegt keine Interferenz vor.

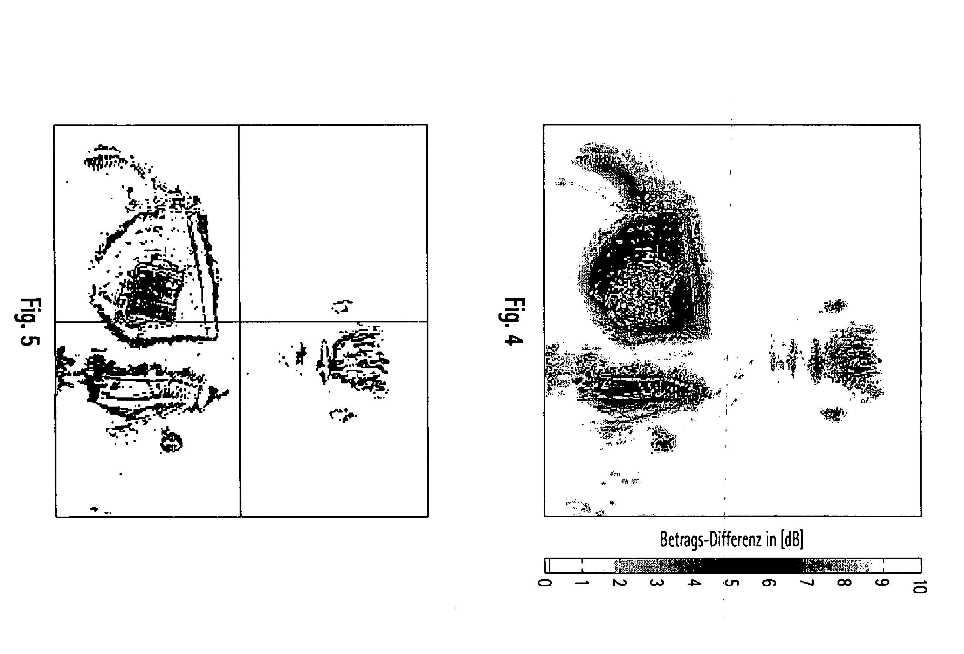

In Fig. 4 sind vor dem Hintergrund einer Betragsantwort des menschlichen Körpers 9 die in den einzelnen Rasterpunkten ermittelten Differenzen zwischen höchster und zweithöchster Signalamplitude des Mikrowellensignals in verschiedenen Graustufen entsprechend dem jeweils ermittelten Betrag der Differenz dargestellt. In Fig. 5 sind im Gegensatz dazu die in einzelnen Rasterpunkten jeweils identifizierten Differenzen zwischen höchster und zweithöchster Signalamplitude des Mikrowellensignals unabhängig vom jeweiligen Betrag der Differenz in einer einzigen Graustufe dargestellt.

Im nächsten Verfahrensschritt S40 erfolgt die Ermittlung von Ansammlungen von benachbarten Rasterpunkten, die jeweils das Interferenz-Kriterium erfüllen.

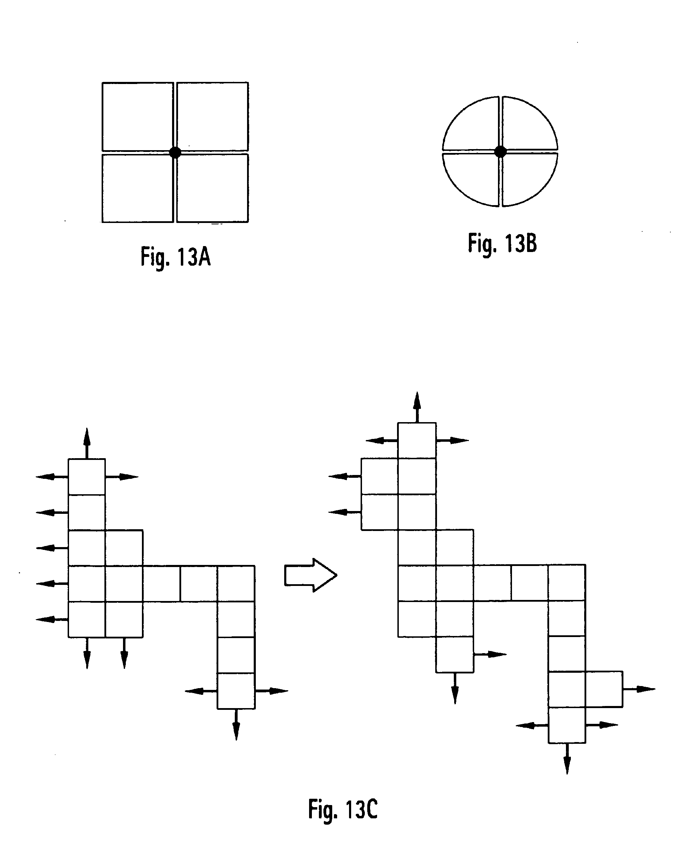

In einer ersten Ausführungsform des Unterverfahrens zur Ermittlung einer Ansammlung von benachbarten Rasterpunkten gemäß dem Flussdiagramm in Fig. 12B werden in einem ersten Unterverfahrensschritt S41 für jeden Rasterpunkt des lateralen, zweidimensionalen Rasters jeweils benachbarte Gruppen aus einer festgelegten Anzahl von jeweils bevorzugt gleich vielen, in der Nähe des jeweiligen Rasterpunkts in jeweils einem Winkelsegment zum jeweiligen Rasterpunkt positionierten Rasterpunkten festgelegt. Hierbei kann es sich beispielsweise gemäß Fig. 13A um in jeweils 4 bevorzugt gleich großen Quadraten angeordnete Rasterpunkte handeln, die um einen als schwarzer Punkt in Fig. 13A dargestellten Rasterpunkt angeordnet sind, oder gemäß Fig. 13B beispielsweise um in jeweils bevorzugt 4 gleich großen Winkelsegmenten eines Kreises angeordnete Rasterpunkte handeln, die ebenfalls um einen als schwarzen Punkt in Fig. 13B dargestellten Rasterpunkt angeordnet sind. Darüber hinaus sind andere Ausgestaltungen von Gruppen von jeweils benachbarten Rasterpunkten denkbar und von der Erfindung abgedeckt, die jeweils eine gleiche oder unterschiedliche Anzahl von Rasterpunkten beinhalten, jeweils Rasterpunkte in der Nähe des jeweilig betrachteten Rasterpunkts umfassen und jeweils einen Winkelabschnitt zum jeweilig betrachteten Rasterpunkt bilden.

Im nächsten Unterverfahrensschritt S42 der ersten Ausführungsform des Unterverfahrens zur Ermittlung einer Ansammlung von Rasterpunkten wird für jede Gruppe von Rasterpunkten die Anzahl von Rasterpunkten gezählt, die jeweils das Interferenz-Kriterium erfüllen.

Schließlich wird im abschließenden Unterverfahrensschritt S43 der ersten Ausführungsform des Unterverfahrens zur Ermittlung einer Ansammlung von Rasterpunkten derjenige Rasterpunkt zur Ansammlung von Rasterpunkten hinzugefügt, in dessen zugeordneten Gruppen von Rasterpunkten jeweils eine festgelegte Mindestanzahl von Rasterpunkten im vorherigen Unterverfahrensschritt S42 gezählt wurde, die das Interferenz-Kriterium erfüllen.

In einer zweiten Ausführungsform des Unterverfahrens zur Ermittlung einer Ansammlung von benachbarten Rasterpunkten wird in einem ersten Unterverfahrensschritt S401 eine Ansammlung von Rasterpunkten, die jeweils das Interferenzkriterium erfüllen, entsprechend der Unterverfahrensschritte S41, S42 und S43 der ersten Ausführungsform des Unterverfahrens zur Ermittlung einer Ansammlung von benachbarten Rasterpunkten ermittelt. Eine somit ermittelte Ansammlung von Rasterpunkten entspricht einem Kästchen in Fig. 12C. Ausgehend von einer derart ermittelten Ansammlung von benachbarten Rasterpunkten, die jeweils das Interferenz-Kriterium erfüllen, werden entsprechend Fig. 12C in beiden Richtungen und in beiden Dimensionen des lateralen, zweidimensionalen Rasters benachbarte Ansammlungen von Rasterpunkten, die jeweils das Interferenz-Kriterium erfüllen, gesucht. Liegen in der Nachbarschaft der zuerst ermittelten Ansammlung von Rasterpunkten mit erfüllten Interferenz-Kriterium Ansammlungen von Rasterpunkten mit jeweils erfüllten Interferenz-Kriterium vor, so werden diese Ansammlungen von Rasterpunkten zur zuerst ermittelten Ansammlung von Rasterpunkten hinzugefügt, um auf diese Weise eine Ansammlung von Rasterpunkten auf einer übergeordneten Makroebene zu bilden.

Im nächsten Unterverfahrensschritt S402 werden sukzessive in mehreren jeweils aufeinander folgenden Suchschritten wiederum ausgehend von der bisher ermittelten Ansammlung von Rasterpunkten in beiden Richtungen und in beiden Dimensionen des lateralen, zweidimensionalen Rasters benachbarte Ansammlungen von Rasterpunkten, die jeweils wiederum das Interferenz-Kriterium erfüllen, gesucht und zur bisher ermittelten Ansammlung von Rasterpunkten hinzugefügt.

Sind auf diese Weise alle Rasterpunkte des lateralen, zweidimensionalen Rasters untersucht worden, so wird im abschließenden Unterverfahrensschritt S403 anhand von mehreren Kriterien ermittelt, ob die ermittelte Ansammlung von Rasterpunkten eine bestimmte Mindestanzahl von Rasterpunkten in einer bestimmten Fläche aufweist und somit ein detektierbares Objekt darstellt. Um linienförmige Ansammlungen von Rasterpunkten auszuschließen, die von Körper-Konturen verursacht sind oder von Nähten oder Falten der Kleidung 10 hervorgerufen werden können oder durch Ausleuchtungsgrenzen verursacht werden, werden die am äußersten Rand der ermittelten Ansammlung von Rasterpunkten in beiden Richtungen von beiden Dimensionen des Rasters jeweils auftretenden Rasterpunkte ermittelt, deren Abstand jeweils berechnet und mit jeweils einem für die jeweilige Dimension des Rasters festgelegten Mindestabstand verglichen. Die ermittelte Ansammlung von Rasterpunkten stellt ein detektierbares Objekt dar, wenn die ermittelten Abstände zwischen den jeweils extremen Rasterpunkten in beiden Dimensionen jeweils größer als die festgelegten Mindestabstände sind.

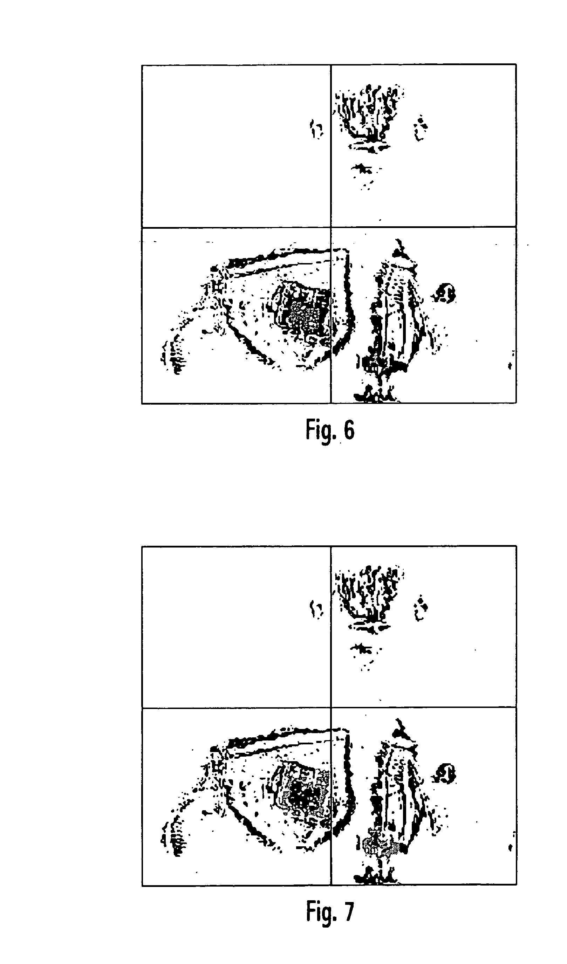

In Fig. 6 sind in grauer Schattierung die im Unterverfahren identifizierten Ansammlungen von benachbarten Rasterpunkten, die jeweils ein verhülltes Objekt 8 darstellen sollen, dargestellt. Zum Vergleich sind in Fig. 6 in weißer Farbe die Rasterpunkte dargestellt, die eine gewisse Differenz zwischen höchster und zweithöchster Signalamplitude des reflektierten Mikrowellensignals aufweisen, aber nicht zur Ansammlung von benachbarten Rasterpunkten gehören. Bei diesen Rasterpunkten handelt es sich um am menschlichen Körper 9 reflektierte Mikrowellensignale, die beispielsweise mit einem Rauschen überlagert sind. Hierbei wird darauf hingewiesen, dass allerdings auch Stellen ohne Reflexion weiß werden.

Im auf das Unterverfahren zur Identifizierung einer Ansammlung von benachbarten Rasterpunkten folgenden Verfahrensschritt S50 werden um jede identifizierte Ansammlung von benachbarten Rasterpunkten zusätzliche Rasterpunkte in einem an die Ansammlung von benachbarten Rasterpunkten angrenzenden Randbereich hinzugefügt. Die Breite des Randbereichs ist über seinem gesamten Verlauf gleich stark ausgeprägt und wird vorab festgelegt. Die Breite des Randbereichs kann für jede einzelne Ansammlung von benachbarten Rasterpunkten individuell in Abhängigkeit beispielsweise der spezifischen Größe oder der spezifischen Kontur der identifizierten Ansammlung von benachbarten Rasterpunkten eingestellt werden. In Fig. 7 sind in einer dunkelgrauen Farbe die Rasterpunkte des hinzugefügten Randbereichs und in einer hellgrauen Farbe die Rasterpunkte der ursprünglich identifizierten Ansammlung von benachbarten Rasterpunkten dargestellt.

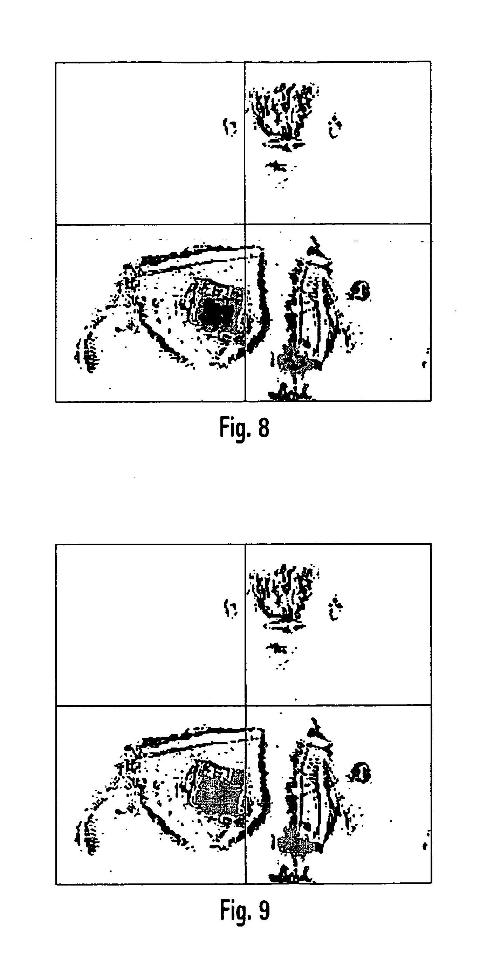

Existieren Rasterpunkte innerhalb von einzelnen Ansammlungen von benachbarten Rasterpunkten, die nicht zu den Ansammlungen von benachbarten Rasterpunkten gehören, wie in Fig. 8 in weißer Farbe in Abgrenzung zu den in hellgrauen Farbe gekennzeichneten Rasterpunkten der Ansammlung von Rasterpunkten dargestellt ist, so werden diese im nächsten Verfahrensschritt S60 zu den jeweiligen Ansammlungen von benachbarten Rasterpunkten hinzugefügt. Dies ist in Fig. 9 dargestellt, in der sämtliche Rasterpunkte innerhalb der einzelnen Ansammlungen von benachbarten Rasterpunkten in hellgrauer Farbe gekenntzeichnet sind.

Im abschließenden Verfahrensschritt S70 werden die identifizierten Ansammlungen von benachbarten Rasterpunkten, die die zu detektierenden Objekte 9 kennzeichnen sollen, auf einem Bildschirm (Display) dargestellt. Das Display umfasst alle Rasterpunkte des lateralen, zweidimensionalen Rasters.

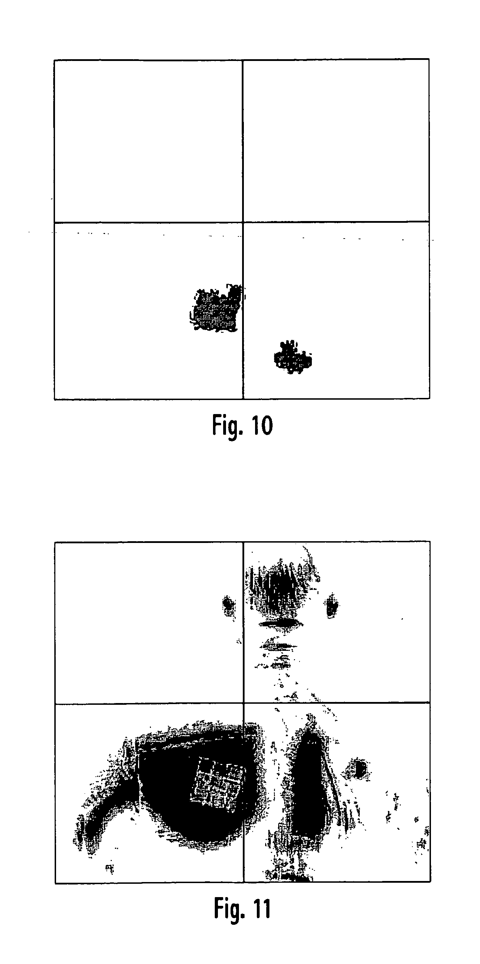

In einer ersten Ausführungsform zur Darstellung von verhüllten Objekten werden gemäß Fig. 10 die zu den einzelnen Ansammlungen von benachbarten Rasterpunkten gehörigen Rasterpunkte in einer ersten Farbe, hier in grauer Farbe, dargestellt, während die nicht zu den Ansammlungen von benachbarten Rasterpunkten gehörigen Rasterpunkte in einer zweiten Farbe, hier in schwarzer Farbe, dargestellt werden.

In einer zweiten Ausführungsform zur Darstellung von verhüllten Objekten enthalten die Rasterpunkte, die nicht zu den identifizierten Ansammlungen von benachbarten Rasterpunkten gehören, zur besseren Lokalisierung der versteckten Objekte 11 relativ zum menschlichen Körper 9 gemäß Fig. 11 korrespondierende Bildinformationen des menschlichen Körpers 9. Dies können, wie in Fig. 11 dargestellt ist, die zum erfassten menschlichen Körper 9 in bestimmten Grauschattierungen dargestellten Werte der Betrags-Antwort oder auch die in einzelnen Grauschattierungen dargestellten Bildpunkte eines vom menschlichen Körper 9 aufgenommenen Fotos sein.

Die Erfindung ist nicht auf die einzelnen Ausführungsformen beschränkt. Von der Erfindung ist auch ein rein zeitbereichsorientiertes Verfahren, d.h. auf einer Pulsradarmessung basierendes Verfahren, mit einem den Netzwerkanalysator ersetzenden Transientenrekorder abgedeckt.

**Patentansprüche**

1.  Verfahren zur Erkennung eines verhüllten dielektrischen Objekts mit folgenden Verfahrensschritten:

    • Erzeugen und Aussenden eines Mikrowellensignals in Richtung des verhüllten Objekts (9),
    • Erfassen des vom Objekt (9) reflektierten Mikrowellensignals in einem örtlichen Raster,
    • Identifizieren einer höchsten Signalamplitude und einer innerhalb eines bestimmten Zeitabstands zur höchsten Signalamplitude vorausgehenden oder nachfolgenden zweithöchsten Signalamplitude im zeitlichen Verlauf des erfassten Mikrowellensignals in mehreren Rasterpunkten des Rasters,
    **gekennzeichnet durch**
    • Bilden einer Differenz zwischen der in einem Rasterpunkt jeweils ermittelten höchsten und zweithöchsten Signalamplitude des erfassten Mikrowellensignals und Vergleichen der Differenz mit einem festgelegten Schwellwert und
    • Detektieren des Objektes (9), falls eine Identifizierung einer Ansammlung von Rasterpunkten des Rasters vorliegt, in denen jeweils die Differenz zwischen der höchsten und der zweithöchsten Signalamplitude des erfassten Mikrowellensignals kleiner als der festgelegte Schwellwert ist.

2.  Verfahren nach Anspruch 1,
    **dadurch gekennzeichnet,**
    **dass** das Objekt (11) eine Substanz mit einer von der Permittivität des menschlichen Körpers und der Luft der umgebenden Atmosphäre abweichenden Permittivität ist.

3.  Verfahren nach Anspruch 1 oder 2,
    **dadurch gekennzeichnet,**
    **dass** das verhüllte Objekt (11) sich innerhalb oder unterhalb einer Kleidung befindet, die von einem menschlichen Körper (9) getragen wird.

4.  Verfahren nach einem der Ansprüche 1 bis 3,
    **dadurch gekennzeichnet,**
    **dass** das Spektrum des erzeugten Mikrowellensignals mittels Filterung, bevorzugt mittels Filterung nach Hamming, Hann, Gauß oder Tschebyscheff, gefenstert wird.

5.  Verfahren nach einem der Ansprüche 1 bis 4,
    **dadurch gekennzeichnet,**
    **dass** die Identifizierung einer Ansammlung von Rasterpunkten folgende Verfahrensschritte umfasst:

    • Festlegen von mehreren benachbarten Gruppen aus jeweils einer festgelegten Anzahl von bevorzugt gleich vielen, benachbarten Rasterpunkten für jeden Rasterpunkt, die jeweils in einem Winkelsegment zum jeweiligen Rasterpunkt in der Nähe des jeweiligen Rasterpunktes positioniert sind,
    • Zählen von Rasterpunkten mit einer unterhalb des Schwellwerts liegenden Differenz zwischen höchster und zweithöchster Signalamplitude innerhalb jeder Gruppe von Rasterpunkten und
    • Identifizieren eines zur Ansammlung von Rasterpunkten gehörigen Rasterpunktes, falls in jeder seiner zugeordneten Gruppen von Rasterpunkten jeweils mindestens eine festgelegte Anzahl von Rasterpunkten mit einer unterhalb des Schwellwerts liegenden Differenz zwischen höchster und zweithöchster Signalamplitude vorliegen.

6.  Verfahren nach einem der Ansprüche 1 bis 4,
    **dadurch gekennzeichnet,**
    **dass** die Identifizierung einer Ansammlung von Rasterpunkten folgende Verfahrensschritte umfasst:

    sukzessives Hinzufügen von zu einem Rasterpunkt mit einer unterhalb des Schwellwerts liegenden Differenz zwischen höchster und zweithöchster Signalamplitude in zwei Richtungen jeweils direkt benachbarten Rasterpunkten zu einer Gruppe von zusammenhängenden Rasterpunkten, falls in den Rasterpunkten jeweils eine unterhalb des Schwellwerts liegende Differenz zwischen höchster und zweithöchster Signalamplitude ermittelt wurde.

7. Verfahren nach Anspruch 5 oder 6,
**dadurch gekennzeichnet,**
**dass** die identifizierte Ansammlung von Rasterpunkten um diejenigen Rasterpunkte ergänzt wird, die innerhalb eines die Ansammlung von Rasterpunkten umgebenden Randbereichs positioniert sind, wobei die Breite des Randbereichs festlegbar ist.

8. Verfahren nach einem der Ansprüche 1 bis 7,
**dadurch gekennzeichnet,**
**dass** innerhalb der Ansammlung von Rasterpunkten positionierte Rasterpunkte, die jeweils eine oberhalb des Schwellwerts liegende Differenz zwischen höchster und zweithöchster Signalamplitude aufweisen, der Ansammlung von Rasterpunkten hinzugefügt werden.

9. Verfahren nach einem der Ansprüche 1 bis 8,
**dadurch gekennzeichnet,**
**dass** die zur identifizierten Ansammlung von Rasterpunkten gehörigen Rasterpunkte auf einem das gesamte laterale zweidimensionale Raster darstellenden Bildschirm mit einer ersten Kennzeichnung, insbesondere in einer ersten Farbe, dargestellt werden.

10. Verfahren nach einem der Ansprüche 1 bis 9,
**dadurch gekennzeichnet,**
**dass** die nicht zur Ansammlung von Rasterpunkten gehörigen Rasterpunkte in einer zweiten Kennzeichnung, insbesondere in einer zweiten Farbe, auf dem Bildschirm dargestellt werden.

11. Verfahren nach Anspruch 3,
**dadurch gekennzeichnet,**
**dass** die nicht zur Ansammlung von Rasterpunkten gehörigen Rasterpunkte ein gerastertes Abbild des menschlichen Körpers (9), beispielsweise ein optisches Bild des menschlichen Körpers, enthalten

12. Verfahren nach einem der Ansprüche 3 oder 11,
**dadurch gekennzeichnet,**
**dass** das verhüllte dielektrische Objekt (11) in einem bestimmten Zeitraster wiederholt detektiert wird und die verschiedenen Zeitrastern zugeordneten Detektionswerte korreliert oder gemittelt werden.

**Claims**

1. Method for detecting a covered dielectric object, comprising the following method steps:

   • generating and emitting a microwave signal in the direction of the covered object (9),
   • capturing the microwave signal reflected by the object (9) in a local grid,
   • identifying a highest signal amplitude and a second highest signal amplitude preceding or following the greatest signal amplitude within a specific time interval in the time profile of the captured microwave signal in a plurality of grid points in the grid, **characterized by**
   • the formation of a difference between the highest and second highest signal amplitude of the captured microwave signal, respectively established in one grid point, and the comparison of the difference with a preset threshold, and
   • the detection of the object (9) if there is an identification of a collection of grid points in the grid, in which in each case the difference between the highest and the second highest signal amplitude of the captured microwave signal is smaller than the preset threshold.

2. Method according to Claim 1,
**characterized**
**in that** the object (11) is a substance with a permittivity differing from the permittivity of the human body and the permittivity of the air of the surrounding atmosphere.

3. Method according to Claim 1 or 2,
**characterized**
**in that** the covered object (11) is situated within or below clothing worn by a human body (9).

4. Method according to one of Claims 1 to 3,
**characterized**
**in that** the spectrum of the generated microwave signal is windowed by filtering, preferably by means of a Hamming, Hann, Gaussian or Chebyshev filter.

5. Method according to one of Claims 1 to 4,
**characterized**
**in that** the identification of a collection of grid points comprises the following method steps:

• setting a plurality of adjacent groups consisting of in each case a fixed number of preferably the same number of adjacent grid points for each grid point, which groups are respectively positioned in an angular segment with respect to the respective grid point in the vicinity of the respective grid point,
• counting grid points with a difference between the highest and second highest signal amplitude lying below the threshold within each group of grid points and
• identifying a grid point belonging to the collection of grid points if respectively at least a fixed number of grid points with a difference between the highest and second highest signal amplitude lying below the threshold are present in each of its associated groups of grid points.

6. Method according to one of Claims 1 to 4,
**characterized**
**in that** the identification of a collection of grid points comprises the following method steps:

successive adding of grid points which are respectively directly adjacent to a grid point with a difference between the highest and second highest signal amplitude lying below the threshold in two directions to a group of associated grid points if a difference between the highest and second highest signal amplitude lying below the threshold was respectively detected in the grid points.

7. Method according to Claim 5 or 6,
**characterized**
**in that** the identified collection of grid points is complemented by those grid points which are positioned within an edge region surrounding the collection of grid points, wherein the width of the edge region can be set.

8. Method according to one of Claims 1 to 7,
**characterized**
**in that** grid points which are positioned within the collection of grid points and respectively have a difference between the highest and second highest signal amplitude lying above the threshold are added to the collection of grid points.

9. Method according to one of Claims 1 to 8,
**characterized**
**in that** the grid points belonging to the identified collection of grid points are displayed, on a screen displaying the whole lateral two-dimensional grid, with a first characterization, in particular in a first colour.

10. Method according to one of Claims 1 to 9,
**characterized**
**in that** the grid points not belonging to the collection of grid points are displayed, on the screen, using a second characterization, in particular in a second colour.

11. Method according to Claim 3,
**characterized**
**in that** the grid points not belonging to the collection of grid points contain a rasterized image of the human body (9), for example an optical image of the human body.

12. Method according to either of Claims 3 or 11,
**characterized**

**in that** the covered dielectric object (11) is repeatedly detected in a specific time frame and the detection values associated with the various time periods are correlated or averaged.

**Revendications**

1. Procédé de détection d'un objet diélectrique masqué ou dissimulé, comprenant les étapes de procédé suivantes :

   • production et émission d'un signal de microondes en direction de l'objet (9) dissimulé,
   • relevé du signal de microondes réfléchi par l'objet (9), dans une trame de localisation,
   • identification d'une amplitude de signal la plus élevée, et d'une amplitude de signal la deuxième plus élevée la précédant ou la succédant à l'intérieur d'un intervalle de temps déterminé par rapport à l'amplitude de signal la plus élevée, au cours de la variation en fonction du temps du signal de microondes relevé, en plusieurs points de trame de la trame,
   **caractérisé par**
   • la formation d'une différence entre l'amplitude de signal la plus élevée et la deuxième plus élevée du signal de microondes relevé, respectivement déterminées en un point de trame, et la comparaison de la différence avec une valeur de seuil définie, et
   • la détection de l'objet (9) dans le cas où l'on est en présence d'une identification d'une accumulation de points de trame de la trame, au niveau de chacun desquels la différence entre l'amplitude de signal la plus élevée et la deuxième plus élevée du signal de microondes relevé, est située en-dessous de la valeur de seuil définie.

2. Procédé selon la revendication 1,
   **caractérisé en ce que** l'objet (11) est une substance d'une permittivité différente de la permittivité du corps humain et de l'air de l'atmosphère environnante.

3. Procédé selon la revendication 1 ou la revendication 2,
   **caractérisé en ce que** l'objet dissimulé (11) se trouve à l'intérieur d'un vêtement ou sous un vêtement, qui est porté par un corps humain (9).

4. Procédé selon l'une des revendications 1 à 3,
   **caractérisé en ce que** l'on soumet le spectre du signal de microondes à un fenêtrage au moyen d'un filtrage, de préférence au moyen d'un filtrage selon Hamming, Hann, Gauss ou Tschebyscheff.

5. Procédé selon l'une des revendications 1 à 4,
   **caractérisé en ce que** l'identification d'une accumulation de points de trame comprend les étapes de procédé suivantes :

   • définition, pour chaque point de trame, de plusieurs groupes voisins composés chacun d'un nombre défini, de préférence identique, de points de trame voisins, qui sont positionnés chacun dans un secteur angulaire par rapport au point de trame respectivement considéré, au voisinage du point de trame respectivement considéré,
   • comptage de points de trame présentant une différence entre l'amplitude de signal la plus élevée et la deuxième plus élevée, située en-dessous de la valeur de seuil, à l'intérieur de chaque groupe de points de trame, et
   • identification d'un point de trame faisant partie de l'accumulation de points de trame, dans le cas où dans chacun des groupes de points de trame, qui lui sont associés, l'on est en présence respectivement d'au moins un nombre défini de points de trame présentant une différence entre l'amplitude de signal la plus élevée et la deuxième plus élevée, située en-dessous de la valeur de seuil.

6. Procédé selon l'une des revendications 1 à 4,
   **caractérisé en ce que** l'identification d'une accumulation de points de trame comprend les étapes de procédé suivantes :

   ajout successif à un groupe de points de trame liés, de points de trame directement voisins, dans deux directions, d'un point de trame présentant une différence entre l'amplitude de signal la plus élevée et la deuxième plus élevée, située en-dessous de la valeur de seuil, dans le cas où l'on a déterminé respectivement au niveau de ces points de trame, une différence entre l'amplitude de signal la plus élevée et la deuxième plus élevée, située en-dessous de la valeur de seuil.

**7.** Procédé selon la revendication 5 ou la revendication 6,
**caractérisé en ce que** l'accumulation identifiée de points de trame est complétée par les points de trame, qui sont positionnés à l'intérieur d'une zone de bordure entourant l'accumulation de points de trame, la largeur de la zone de bordure pouvant être définie.

**8.** Procédé selon l'une des revendications 1 à 7,
**caractérisé en ce que** des points de trame, qui sont positionnés à l'intérieur de l'accumulation de points de trame, et présentent respectivement une différence entre l'amplitude de signal la plus élevée et la deuxième plus élevée, située au-dessus de la valeur de seuil, sont ajoutés à l'accumulation de points de trame.

**9.** Procédé selon l'une des revendications 1 à 8,
**caractérisé en ce que** les points de trame appartenant à l'accumulation de points de trame identifiée, sont représentés avec une première caractéristique, notamment une première couleur, sur un écran représentant la totalité de la trame latérale bidimensionnelle.

**10.** Procédé selon l'une des revendications 1 à 9,
**caractérisé en ce que** les points de trame n'appartenant pas à l'accumulation de points de trame sont représentés sur l'écran avec une deuxième caractéristique, notamment une deuxième couleur.

**11.** Procédé selon la revendication 3,
**caractérisé en ce que** les points de trame n'appartenant pas à l'accumulation de points de trame, englobent une image tramée du corps humain (9), par exemple une image optique du corps humain.

**12.** Procédé selon l'une des revendications 3 ou 11,
**caractérisé en ce que** l'objet diélectrique (11) masqué ou dissimulé est détecté de manière répétée selon une trame de temps déterminée, et l'on effectue une corrélation ou une moyenne des valeurs de détection associées aux différentes trames de temps.

Fig. 1C

Fig. 1B

Fig. 1A

Fig. 2

EP 2 427 785 B1

**Fig. 3**

Fig. 4

Fig. 5

Fig. 6

Fig. 7

Fig. 8

Fig. 9

Fig. 10

Fig. 11

Start

S10 — Erzeugen und Aussenden eines Mikrowellensignals und Projezieren des Mikrowellensignals auf das verhüllte Objekt zzgl. den menschlichen Körper

S20 — Erfassen des am verhüllten Objekt zzgl. am menschlichen Körper reflektierten Mikrowellensignals in einzelnen Rasterpunkten eines lateralen Rasters

S30 — Ermitteln der höchsten Signalamplitude und einer der höchsten Signalamplitude innerhalb eines Zeitintervalls nachfolgenden zweithöchsten Signalamplitude und Bilden der Differenz zwischen höchster und zweithöchster Signalamplitude in jedem Rasterpunkt des lateralen Rasters

S40 — Identifizieren einer Ansammlung von Rasterpunkten mit einer gegenüber einem festgelegten Schwellenwert kleineren Differenz zwischen höchster und zweithöchster Signalamplitude

S50 — Hinzufügen von zusätzlichen Rasterpunkten zur Ansammlung von Rasterpunkten innerhalb eines an die Ansammlung von Rasterpunkten angrenzenden Randbereichs mit festgelegter Randbereichsbreite

S60 — Hinzufügen von Rasterpunkten innerhalb der Ansammlung von Rasterpunkten, die das Interferenz-Kriterium erfüllen, zur Ansammlung von Rasterpunkten

S70 — Darstellen der identifizierten Ansammlung von Rasterpunkten als detektiertes verhülltes Objekt und optional des menschlichen Körpers auf einem Display

Ende

## Fig. 12A

Start

Festlegen von jeweils benachbarten Gruppen aus einer festgelegten Anzahl von gleichvielen, in der Nähe des jeweilig betrachteten Rasterpunktes in jeweils einem Winkelsegment zum jeweiligen Rasterpunkt positionierten Rasterpunkten für jeden Rasterpunkt

Zählen der Rasterpunkte mit einer gegenüber einem festgelegten Schwellwert Kleineren Differenz zwischen höchsten und zweithöchsten Strahlungspegel (= Interferenz-Kriterium) in jeder Gruppe

Hinzufügen jedes Rasterpunkts zur Ansammlung von Rasterpunkten, der in jeder seiner Gruppen von Rasterpunkten mindestens eine festgelegte Anzahl von Rasterpunkten aufweist, die das Interferenz-Kriterium erfüllen

Ende

**Fig. 12B**

Start

Ermitteln einer Ansammlung von Rasterpunkten mit erfüllten Interferenz-Kriterium und Hinzufügen von in beiden Richtungen und Dimensionen jeweils benachbarten Ansammlungen von Rasterpunkten mit erfüllten Interferenz-Kriterium zur ermittelten Ansammlung von Rasterpunkten

Sukzessives Hinzufügen von in beiden Richtungen und Dimensionen zur bisher ermittelten Ansammlung von Rasterpunkten mit erfüllten Interferenz-Kriterium identifizierten Ansammlungen von Rasterpunkten mit erfüllten Interferenz-Kriterium zur bisher ermittelten Ansammlung von Rasterpunkten

Überprüfen, ob ermittelte Ansammlung von Rasterpunkten ein detectierbares Objekt darstellt

Ende

**Fig. 12C**

Fig. 13A

Fig. 13B

Fig. 13C

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6965340 B1
- US 2006066469 A1